# EUROPÄISCHE PATENTSCHRIFT

(11) **EP 1 159 540 B1**
(45) Veröffentlichungstag und Bekanntmachung des Hinweises auf die Patenterteilung: **29.12.2004**
(21) Anmeldenummer: 01913508.6
(22) Anmeldetag: 12.01.2001
(51) Int. Cl.: F16C 11/06

(54) **KUGELGELENK**
BALL JOINT
JOINT A ROTULE

(30) Priorität: 13.01.2000 DE 10001028
(43) Veröffentlichungstag der Anmeldung: 05.12.2001
(73) Patentinhaber: ZF Lemförder Metallwaren AG, 49441 Lemförde (DE)
(72) Erfinder: GRÄBER, Jürgen, 32351 Stemwede-Dielingen (DE); HÜTTNER, Toralf, 49090 Osnabrück (DE)
(86) Internationale Anmeldenummer: PCT/DE2001/000112
(87) Internationale Veröffentlichungsnummer: WO 2001/051821

(56) Entgegenhaltungen:
- WO-A-94/29605
- DE-U- 1 911 807
- FR-A- 994 751
- US-A- 1 976 983
- DUERSCHMIED F: "BAUGRUPPEN FUER PARALLELE KINEMATIKEN" WERKSTATT UND BETRIEB,DE,CARL HANSER VERLAG. MUNCHEN, Bd. 132, Nr. 5, Mai 1999 (1999-05), Seiten 33-34,36,38, XP000824362 ISSN: 0043-2792

## Beschreibung

Die Erfindung betrifft ein Kugelgelenk nach dem Oberbegriff des Anspruchs 1.

Kugelgelenke der gattungsgemäßen Art sind im Stand der Technik prinzipiell bekannt und werden beispielsweise als Spurstangengelenke bei Kraftfahrzeuglenkungen eingesetzt. Darüber hinaus finden sie Verwendung in vielen Bereichen der Fahrwerkstechnik, aber auch in anderen Bereichen der Kraftfahrzeugtechnik wie z.B. bei Scheibenwischergestängen.. Zwischen den kugelförmigen Lagerflächen des Gelenkzapfens und dem Gelenkgehäuse befindet sich üblicherweise eine ein- oder mehrteilige Lagerschale aus Kunststoff Die Lagerschale ist zumeist ortsfest im Gelenkgehäuse festgelegt. Um eine einwandfreie Arbeitsweise derartiger Kugelgelenke zu gewährleisten, müssen die Innenflächen der Lagerschale sowie die kugelförmige Lagerfläche des Gelenkzapfens im Rahmen der Herstellung mit möglichst kleinen Toleranzen gefertigt werden, was zu erhöhten Produktionskosten für derartige Kugelgelenke führt.

Aus der DE 1 911 807 U ist ein Traggelenk für gelenkte Räder an Kraftfahrzeugen bekannt, das im wesentlichen aus einem, mit einer eine entsprechende Halterung aufweisenden Pfanne zusammenwirkenden Kugelbolzen besteht, wobei auch der dem Bolzenende des Kugelbolzens gegenüberliegende Teil der Kugel mit der Pfanne in inniger Berührung steht. Zwischen Pfanne und Kugel des Kugelbolzens sind zahlreiche Rollkörper vorgesehen, welche die eine, dem Bolzenende abgelegene Hälfte der Kugel umgeben, während die zweite, den Bolzen tragende Hälfte mit einem gleichzeitig die Rollkörper und die Kugel lagesichernden Ring zusammenwirkt, der die Rollkörper und die Kugel entweder durch Eigenelastizität oder unter zu Hilfenahme von Federn elastisch abstützt.

Die US 1 976 983 A offenbart ein Kugelgelenk mit einem Gelenkgehäuse und einem mit einer kugelförmigen Lagerfläche versehenen in einem Lagerungshohlraum des Gelenkgehäuses angeordneten Gelenkzapfen, wobei zwischen der kugelförmigen Lagerfläche des Gelenkzapfens und der Innenfläche des Lagerungshohlraums eine große Anzahl Kugeln lose angeordnet ist. Diese Kugeln bilden die Lagerung für den Gelenkzapfen in dem Gelenkgehäuse.

Ausgehend von der DE 1 911 807 U liegt der Erfindung die Aufgabe zugrunde, Formabweichungen zwischen der kugelförmigen Lagerfläche des Gelenkzapfens und dem diese aufnehmenden Lagerungsholraum auszugleichen.

Diese Aufgabe wird erfindungsgemäß durch ein Kugelgelenk mit den Merkmalen nach Anspruch 1 bzw. Anspruch 2 gelöst.

Die Lehre nach Anspruch 1 bzw. Anspruch 2 sieht vor, ein Kugelgelenk mit einem Gelenkgehäuse und einem mit einer kugelförmigen Lagerfläche versehenen in einem Lagerungshohlraum des Gelenkgehäuses angeordneten Gelenkzapfen, bei dem zwischen der kugelförmigen Lagerfläche des Gelenkzapfens und der hohlkugelförmig ausgebildeten Innenfläche des Lagerungshohlraumes eine große Zahl Kugeln lose angeordnet ist, dahingehend weiterzubilden, dass die Kugeln elastisch verformbar sind und/oder einen Durchmesser kleiner oder gleich 0,1 mm aufweisen. Die lose eingefügten Kugeln bilden im Gegensatz zur bislang verwendeten Lagerschale einen elastischen Puffer und können so in stärkerem Maße als aus dem Stand der Technik bekannt, Formabweichungen zwischen der kugelförmigen Lagerfläche des Gelenkzapfens und dem diese aufnehmenden Lagerungshohlraum des Gelenkgehäuses ausgleichen. Die Kugeln können vorzugweise aus Stahl hergestellt sein und bilden dann aufgrund ihrer Gestalt eine Art Kugellager, verbessern somit die Reibungsarmut zwischen den Lagerflächen und erhöhen gleichzeitig die Festigkeit der Gesamtkonstruktion.

Als optimale Durchmessergröße für die einzelnen Kugeln haben sich Werte im Bereich kleiner oder gleich 0,1 mm bewährt. Bei Kugeln dieser Größenordnung lassen sich in den Zwischenraum zwischen kugelförmiger Lagerfläche und innerer Oberfläche des Lagerungshohlraumes zahlreiche Kugeln unterbringen, wodurch insbesondere auch bei geringer Maßhaltigkeit der Bauteile ein ausreichender Formausgleich erfolgen kann.

Spezielle Ausgestaltungen des Gegenstandes der Erfindung ergeben sich aus den Unteransprüchen.

Es hat sich insbesondere als vorteilhaft erwiesen, die Kugeln aus Kunststoff- oder Kautschukmaterial herzustellen, da diese Materialien einfach bearbeitbar sind und die Kugeln somit kostengünstig hergestellt werden können.

Darüber hinaus kann es zweckmäßig sein, zwischen den einzelnen Kugeln eine Fettfüllung vorzusehen, da das Fett als Bindemittel für die einzelnen Kugeln dienen und gleichzeitig eine weitere Herabsetzung der Reibung bewirken kann.

Es hat sich darüber hinaus als zweckmäßig erwiesen, im Raum zwischen der Lagerfläche des Gelenkzapfens und der inneren Oberfläche des Lagerungshohlraumes mindestens ein Dichtelement anzuordnen, welches den mit den Kugeln angefüllten Innenraum zur offenen Außenseite des Gelenkgehäuses abdichtet. Durch dieses Dichtelement kann zuverlässig verhindert werden, daß infolge von von außen auf das Kugelgelenk einwirkenden Kräften Kugeln aus dem Zwischenraum im Inneren des Kugelgelenkes herausgepresst werden und dadurch die Funkton des Kugelgelenkes beeinträchtigt wird. Darüber hinaus hat das Dichtelement eine Abstreiferfunktion für das zwischen den Kugeln befindliche Fett.

Ferner kann es zweckmäßig sein, außerhalb des Dichtelementes einen zusätzlichen, das Gelenkgehäuse zur Außenseite verschließenden Außenring bzw Deckel anzuordnen, der zum Schutz des Dichtelementes dienen kann.

Im folgenden werden anhand der beigefügten Zeichnungen exemplarisch Ausgestaltungsvarianten des erfindungsgemäßen Kugelgelenkes näher erläutert. Es zeigt:
- Figur 1:: ein erstes Ausführungsbeispiel eines erfindungsgemäßen Kugelgelenkes in Schnittdarstellung und
- Figur 2:: eine abgewandelte Ausgestaltungsvariante des Kugelgelenkes aus Figur 1 in Schnittdarstellung.

Das Kugelgelenk weist in üblicher Weise einen Gelenkzapfen 1 mit einem daran sich anschließenden Gelenkkopf 2 auf, der als kugelförmige Lagerfläche 3 gestaltet ist. Der Gelenkkopf 2 ist in einem Lagerungshohlraum 4 des Gelenkgehäuses 5 verdrehbar und auslenkbar gelagert. Im Zwischenraum zwischen der kugelförmigen Lagerfläche 3 und der korrespondierend hohlkugelförmig ausgebildeten Innenfläche 6 des Lagerungshohlraumes 4 befindet sich eine große Anzahl elastisch verformbarer Kugeln 7, wobei die Kugeln 7 in einem Fettpolster aufgenommen sind.

Durch diese erfindungsgemäße Gestaltung entfällt die aus dem Stand der Technik bekannte, normalerweise zwischen Gelenkkopf 2 und Gelenkgehäuse 5 angeordnete Lagerschale.

Im dargestellten Ausführungsbeispiel sind die Kugeln 7 umlaufend um den Gelenkkopf 2 in einem von zwei Dichtelementen 9 und 10 begrenzten Bereich angeordnet. Die Dichtelemente sind als umlaufende Ringe gestaltet und liegen direkt an der kugelförmigen Lagerfläche 3 des Gelenkkopfes an, um zu verhindern, daß die Kugeln 7 den für sie vorgesehenen Zwischenraum verlassen.

Am Gelenkgehäuse 5 kann an seinem einen Ende, an dem der Gelenkzapfen 1 aus dem Gelenkgehäuse 5 herausragt, ein zusätzlicher Abdeckring angeordnet sein, welcher den Lagerungshohlraum 4 zur Außenseite des Gelenkgehäuses 5 abschließt und gleichzeitig das Dichtelement 10 vor Außeneinflüssen schützt,auf eine bildliche Darstellung dieser Bauvariante wurde in der Zeichnung verzichtet.

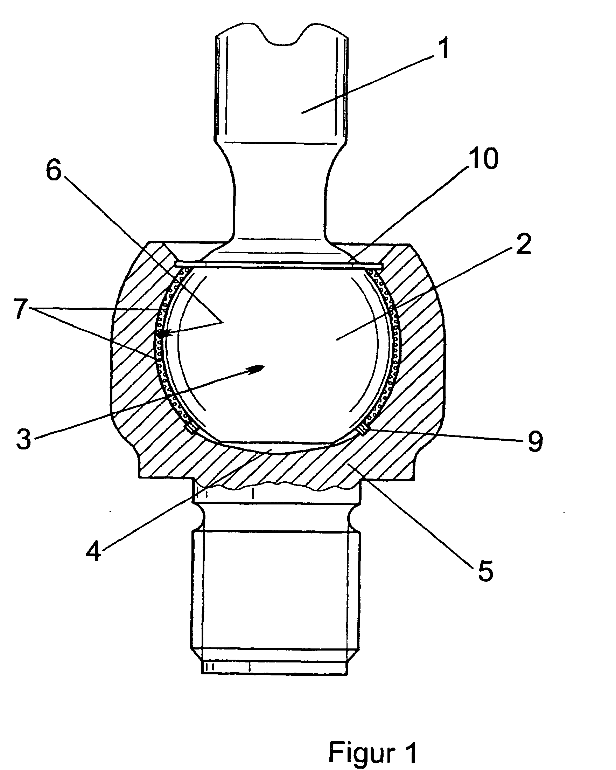

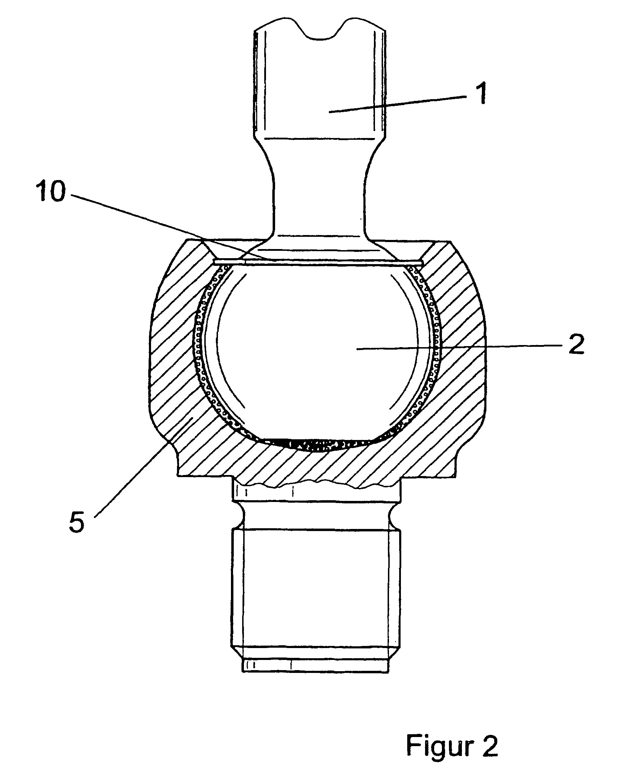

Die Ausführungsvariante des erfindungsgemäßen Kugelgelenkes, die in Figur 2 dargestellt ist, weist im Gegensatz zu derjenigen der Figur 1 nur ein Dichtelement 10 auf, wohingegen das zweite Dichtelement 9 entfallen ist. Durch das Fehlen des weiteren Dichtelementes 9 können sich die Kugeln 7 im gesamten Zwischenraum zwischen der kugelförmigen Lagerfläche 3 und der Innenfläche des Lagerungshohlraumes 4 ausbreiten und verbessern auf diese Weise die Tragfähigkeit des Kugelgelenks und verringern insgesamt die Reibung. Die Kugeln 7 können aus elastischem Kunststoff oder Elastomer-Material hergestellt sein. Sie weisen einen Durchmesser kleiner oder gleich 0,1 mm auf und können aufgrund ihrer elastischen Eigenschaften auch größere Formabweichungen zwischen Gelenkkopf 2 und dem Lagerungshohlraum 4 des Gelenkgehäuses 5 ausgleichen.

### Bezugszeichenliste:

- 1: Gelenkzapfen
- 2: Gelenkkopf
- 3: Kugelförmige Lagerfläche
- 4: Lagerungshohlraum
- 5: Gelenkgehäuse
- 6: Innenfläche
- 7: Kugeln
- 9: Dichtelement
- 10: Dichtelement

## Patentansprüche

1. Kugelgelenk für Fahrwerksauthängungen oder Lenkungen von Kraftfahrzeugen mit einem Gelenkgehäuse (5) und einem mit einer kugelförmigen Lagerfläche (3) versehenen in einem Lagerungshohlraum (4) des Gelenkgehäuses (5) angeordneten Gelenkzapfen (1), wobei zwischen der kugelförmigen Lagerfläche (3) des Gelenkzapfens (1) und der hohlkugelförmig ausgebildeten Innenfläche (6) des Lagerungshohlraumes (4) eine große Zahl Kugeln (7) lose angeordnet ist,
**dadurch gekennzeichnet, dass**
die Kugeln (7) einen Durchmesser kleiner oder gleich 0,1 mm aufweisen.

2. Kugelgelenk nach dem Oberbegriff des Anspruchs 1,
**dadurch gekennzeichnet, dass**
die Kugeln elastisch verformbar sind.

3. Kugelgelenk nach Anspruch 1,
**dadurch gekennzeichnet, dass**
die Kugeln elastisch verformbar sind.

4. Kugelgelenk nach Anspruch 1,
**dadurch gekennzeichnet, dass**
die Kugeln (7) aus Stahl bestehen.

5. Kugelgelenk nach einem der Ansprüche 1 bis 3,
**dadurch gekennzeichnet, dass**
die Kugeln (7) aus Kunststoffmaterial oder aus Kautschukmaterial bestehen.

6. Kugelgelenk nach einem der Ansprüche 1 bis 5,
**dadurch gekennzeichnet, dass**
sich zwischen den einzelnen Kugeln (7) eine Fettfüllung befindet.

7. Kugelgelenk nach einem der Ansprüche 1 bis 6,
**dadurch gekennzeichnet, dass**
der Raum zwischen der Lagerfläche (3) des Gelenkzapfens (1) und der Innenfläche (6) des Lagerungshohlraumes (4) durch mindestens ein Dichtelement (9, 10) zur Außenseite des Gelenkgehäuses (5) abgedichtet ist.

## Claims

1. Ball joint for chassis unit suspension systems or steering systems of motor vehicles comprising a joint housing (5) and a joint pin (1), which is provided with a ball-shaped bearing surface (3) and disposed in a mounting cavity (4) of the joint housing (5), wherein a large number of balls (7) are disposed loosely between the ball-shaped bearing surface (3) of the joint pin (1) and the hollow-ball-shaped inner surface (6) of the mounting cavity (4),
**characterized in that**
the balls (7) have a diameter smaller than or equal to 0.1 mm.

2. Ball joint according to the preamble of claim 1,
**characterized in that**
the balls are elastically deformable.

3. Ball joint according to claim 1,
**characterized in that**
the balls are elastically deformable.

4. Ball joint according to claim 1,
**characterized in that**
the balls (7) are made of steel.

5. Ball joint according to one of claims 1 to 3,
**characterized in that**
the balls (7) are made of plastics material or of natural rubber material.

6. Ball joint according to one of claims 1 to 5,
**characterized in that**
a grease filling is situated between the individual balls (7).

7. Ball joint according to one of claims 1 to 6,
**characterized in that**
the space between the bearing surface (3) of the joint pin (1) and the inner surface (6) of the mounting cavity (4) is sealed off from the exterior of the joint housing (5) by means of at least one sealing element (9, 10).

## Revendications

1. Joint à rotule pour suspensions de châssis ou directions de véhicules automobiles comportant un boîtier (5) du joint et un axe d'articulation (1) pourvu d'une surface d'appui (3) de forme sphérique et disposé dans une cavité de support (4) du boîtier (5) du joint, un grand nombre de billes (7) étant disposé librement entre la surface d'appui (3) de forme sphérique de l'axe d'articulation (1) et la surface intérieure (6), réalisée en forme de sphère creuse, de la cavité de support (4),
**caractérisé en ce que**
les billes (7) présentent un diamètre inférieur ou égal à 0,1 mm.

2. Joint à rotule selon le préambule de la revendication 1, **caractérisé en ce que** les billes sont déformables élastiquement.

3. Joint à rotule selon la revendication 1, **caractérisé en ce que** les billes sont déformables élastiquement.

4. Joint à rotule selon la revendication 1, **caractérisé en ce que** les billes (7) sont en acier.

5. Joint à rotule selon l'une des revendications 1 à 3, **caractérisé en ce que** les billes (7) sont en matière plastique ou en un matériau de caoutchouc.

6. Joint à rotule selon l'une des revendications 1 à 5, **caractérisé en ce qu'**un garnissage de graisse se trouve entre les différentes billes (7).

7. Joint à rotule selon l'une des revendications 1 à 6, **caractérisé en ce que** l'espace entre la surface d'appui (3) de l'axe d'articulation (1) et la surface intérieure (6) de la cavité de support (4) est rendu étanche par au moins un élément d'étanchéité (9, 10) vers le côté extérieur du boîtier (5) du joint.
